(19) Europäisches Patentamt
European Patent Office
Office européen des brevets

(11) EP 4 257 368 A1

(12) EUROPEAN PATENT APPLICATION
published in accordance with Art. 153(4) EPC

(43) Date of publication:
**11.10.2023 Bulletin 2023/41**

(21) Application number: **21903255.4**

(22) Date of filing: **01.12.2021**

(51) International Patent Classification (IPC):
***B60C 1/00*** *(2006.01)* ***C08L 9/00*** *(2006.01)*
***C08K 3/013*** *(2018.01)* ***C08K 3/04*** *(2006.01)*
***C08K 3/36*** *(2006.01)*

(52) Cooperative Patent Classification (CPC):
**B60C 1/00; C08K 3/013; C08K 3/04; C08K 3/36; C08L 9/00**

(86) International application number:
**PCT/JP2021/044032**

(87) International publication number:
**WO 2022/124151 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2020 JP 2020202658**

(71) Applicant: **Eneos Materials Corporation**
**Tokyo, 105-0021 (JP)**

(72) Inventors:
- **KIKUCHI, Toshimitsu**
  **Tokyo 105-8640 (JP)**
- **SENGA, Hirofumi**
  **Tokyo 105-8640 (JP)**
- **SAKAGAMI, Yuto**
  **Tokyo 105-8640 (JP)**
- **SANO, Takuya**
  **Tokyo 105-8640 (JP)**
- **FUKUMOTO, Takato**
  **Tokyo 105-8640 (JP)**
- **HAYAKAWA, Toshiyuki**
  **Tokyo 105-8640 (JP)**

(74) Representative: **TBK**
**Bavariaring 4-6**
**80336 München (DE)**

# (54) POLYMER COMPOSITION, CROSS-LINKED BODY, AND TIRE

(57) A polymer composition includes a conjugated diene-based polymer (A) and a filler having a Mohs hardness of 5 or more (B), wherein the conjugated diene-based polymer (A) comprises a polymer (AI) satisfying expression (i) when a composition ratio (molar ratio) of a structural unit represented by formula (1), a structural unit represented by formula (2), a structural unit represented by formula (3) and a structural unit represented by formula (4) in the polymer is p, q, r and s, respectively.

$$\text{Expression (i)}: 0.75 \leq (p + (0.5 \times r)) / (p + q + (0.5 \times r) + s) \leq 0.95$$

EP 4 257 368 A1

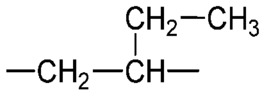

(1)

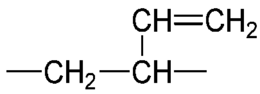

(2)

$$-CH_2-CH_2-$$

(3)

$$-CH_2-CH{=}CH-CH_2-$$

(4)

## Description

Cross-Reference to Related Application

The present application is based on Japanese Patent Application No. 2020-202658 filed December 7, 2020, the content of which is incorporated by reference herein.

The present disclosure relates to a polymer composition, a cross-linked product, and a tire.

Conjugated diene-based polymers such as styrene-butadiene copolymers exhibit good properties, such as thermal resistance, wear resistance, mechanical strength, and molding processability, and thus have been widely used in various industrial products, such as pneumatic tires, anti-vibration rubber, and hoses. Further, conventionally, it has been proposed to obtain a vulcanized rubber having high strength and low wear by using a hydrogenated conjugated diene-based polymer in which a part of the unsaturated bonds of the conjugated diene-based polymer are hydrogenated (for example, Patent Literature 1).

Citation List

Patent Literature

Patent Literature 1: WO 2015/064646

Summary of Invention

Technical Problem

In the production of winter tires and all-season tires, to obtain good grip performance on ice and wet grip performance, polymers having a relatively low glass transition temperature (Tg) are generally used as a rubber component. However, when attempting to provide vulcanized rubber prepared using a polymer having low Tg with grip performance on ice, strength of the vulcanized rubber tends to be reduced. To develop a rubber material for winter tires and all-season tires having both high strength and good grip performance on ice in a balanced way, the present inventors have considered to use a hydrogenated conjugated diene-based polymer with high strength and high wear resistance.

However, vulcanized rubber in which hydrogenated conjugated diene-based polymer is blended tends to have insufficient grip performance on ice compared to vulcanized rubber containing non-hydrogenated conjugated diene-based polymer having the same level of Tg, and thus may not fully satisfy properties required when applied to winter tires and all-season tires. Furthermore, when vulcanized rubber is degraded over time and hardened, the concern is that grip performance on ice of the vulcanized rubber is reduced due to the change in the hardness of the rubber.

The present disclosure has been made in view of the above problems and a primary object is to provide a polymer composition from which a vulcanized rubber having high strength and excellent grip performance on ice and whose degradation of properties over time is suppressed can be obtained.

Solution to Problem

As a result of investigating how to solve the above problems, the present inventors discovered that the above problems can be solved by combining a specific conjugated diene-based polymer and a specific additive. According to the present disclosure, the following means are provided.

A polymer composition includes a conjugated diene-based polymer (A) and a filler having a Mohs hardness of 5 or more (B). The conjugated diene-based polymer (A) comprises a polymer (A1) satisfying expression (i) when a composition ratio (molar ratio) of a structural unit represented by formula (1), a structural unit represented by formula (2), a structural unit represented by formula (3) and a structural unit represented by formula (4) in the polymer is p, q, r and s, respectively.

Expression (i):

$$0.75 \leq (p + (0.5 \times r))/(p + q + (0.5 \times r) + s) \leq 0.95$$

[F1]

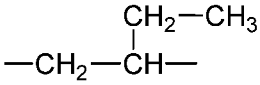 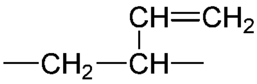

(1) (2)

$-CH_2-CH_2-$ (3)

$-CH_2-CH=CH-CH_2-$ (4)

Advantageous Effects of Invention

According to the present disclosure, a vulcanized rubber having high strength and excellent grip performance on ice and whose degradation of properties over time is suppressed can be produced.

Description of Embodiments

<Polymer composition>

The polymer composition of the present disclosure (hereinafter also simply referred to as "the present composition") contains a conjugated diene-based polymer (A) and a filler having a Mohs hardness of 5 or more (B) (hereinafter also referred to as "high-hardness filler (B)"). Hereinafter, each component included in the present composition and the optionally added components will be described. In addition, in this specification, a numerical range described by using the word "to" between numerical values means that the numerical values described before and after the "to" are included as the lower limit value and the upper limit value.

<Conjugated diene-based polymer (A)>

The present composition includes, as a conjugated diene-based polymer, when a composition ratio (molar ratio) in the polymer of a structural unit represented by formula (1), a structural unit represented by formula (2), a structural unit represented by formula (3), and a structural unit represented by formula (4) are p, q, r, and s, respectively, a polymer satisfying expression (i) (hereinafter, also referred to as "polymer (A1)")

Expression (i):

$$0.75 \leq (p + (0.5 \times r))/(p + q + (0.5 \times r) + s) \leq 0.95$$

[F2]

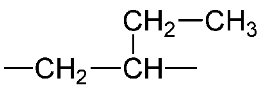 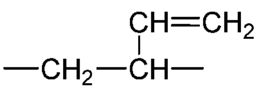

(1) (2)

$-CH_2-CH_2-$ (3)

$-CH_2-CH=CH-CH_2-$ (4)

As the polymer (A1), a hydrogenated product of a polymer having a structural unit derived from a conjugated diene compound can be used. The polymer (A1) as a hydrogenated product can be produced by first polymerizing a monomer containing a conjugated diene compound to obtain a non-hydrogenated conjugated diene-based polymer, and then subjecting the obtained polymer to a hydrogenation reaction.

As the conjugated diene compound constituting the polymer (A1), 1,3-butadiene can be preferably used. Further, in the polymerization for obtaining the polymer (A1), a conjugated diene compound other than 1,3-butadiene may be

used in addition to 1,3-butadiene. Specific examples of the conjugated diene compound other than 1,3-butadiene include isoprene, 2,3-dimethyl-1,3-butadiene, and 1,3-pentadiene. Among these, isoprene is preferable as the conjugated diene compound other than 1,3-butadiene. The conjugated diene compound may be used singly or in combination of two or more types.

The polymer (A1) is preferably a copolymer of a conjugated diene compound and an aromatic vinyl compound, from the viewpoint of increasing the strength of the cross-linked product obtained using the composition. Examples of the aromatic vinyl compound used for the polymerization include styrene, 2-methylstyrene, 3-methylstyrene, 4-methylstyrene, $\alpha$-methylstyrene, N,N-dimethylaminoethylstyrene, and diphenylethylene. Among these, the aromatic vinyl compound is particularly preferably at least one of styrene and $\alpha$-methylstyrene. The aromatic vinyl compound can be used singly or in combination of two or more types.

When the polymer (A1) is a copolymer of a conjugated diene compound and an aromatic vinyl compound, from the viewpoint of having high living properties in anionic polymerization, the polymer (A1) is preferably, among these, a copolymer of 1,3-butadiene and styrene. From the viewpoint that the dispersibility of a filler to be blended in the polymer composition can be improved, the polymer (A1) is preferably a random copolymer having an irregular distribution of the conjugated diene compound and the aromatic vinyl compound. The random copolymer of the conjugated diene compound and the aromatic vinyl compound may further have a block moiety composed of the conjugated diene compound or the aromatic vinyl compound, as long as the effects of the present disclosure can be obtained.

In the copolymer of the conjugated diene compound and the aromatic vinyl compound, the content of the structural unit derived from the aromatic vinyl compound is preferably 3 to 45% by mass relative to the total amount of the monomers constituting the copolymer, because strength, wear resistance, and low hysteresis loss properties can be improved and grip performance on ice can be enhanced. To obtain a cross-linked product that strength, wear resistance, and low hysteresis loss properties are further improved, the content of structural unit derived from the aromatic vinyl compound is more preferably 4% by mass or more, and still more preferably 5% by mass or more, relative to the total amount of the monomers constituting the copolymer.

The content of the structural unit derived from the aromatic vinyl compound is more preferably 40% by mass or less, further preferably 35% by mass or less, still more preferably 30% by mass or less, and particularly preferably 25% by mass or less relative to the total amount of the monomer units constituting the copolymer because grip performance on ice can be sufficiently improved. By setting the content of the unit derived from the aromatic vinyl compound to the above range, both productivity and strength can be achieved. The polymer (A1) includes preferably 50 to 97% by mass of the 1,3-butadiene unit, 3 to 45% by mass of the aromatic vinyl compound unit, and 0 to 30% by mass of the conjugated diene compound other than 1,3-butadiene unit, relative to 100% by mass of the total amount of the monomer units constituting the polymer (A1). Setting to such a blending ratio is preferable because the grip performance on ice can be improved in a well-balanced manner while maintaining the strength of the cross-linked product to a high level.

The above-exemplified conjugated diene compound and aromatic vinyl compound have a similar effect in that they can produce a conjugated diene-based polymer having an active terminal. Therefore, even those compounds not described in the Examples described hereinbelow can be used in the present disclosure.

For polymerization, a monomer other than the conjugated diene compound and the aromatic vinyl compound (hereinafter also referred to as "other monomers") may be used. Examples of other monomers include acrylonitrile, methyl (meth)acrylate and ethyl (meth)acrylate. When the polymer (A1) includes a structural unit derived from other monomers, the content of the structural unit derived from other monomers is preferably 30% by mass or less, more preferably 20% by mass or less and further preferably 10% by mass or less relative to the total amount of the monomers constituting the polymer (A1).

The polymerization method for obtaining the polymer (A1) may be any of a solution polymerization method, a gas phase polymerization method, and a bulk polymerization method. A solution polymerization method is particularly preferable. Further, as the polymerization type, either a batch type or a continuous type may be used. When a solution polymerization method is used, an example of a specific polymerization method is a method in which polymerization is conducted with a monomer including the conjugated diene compound in an organic solvent in the presence of a polymerization initiator and, optionally, a randomizer.

At least one of an alkali metal compound and an alkaline earth metal compound can be used as the polymerization initiator. As the alkali metal compound and the alkaline earth metal compound, those usually used as an initiator in anionic polymerization can be used. Specific examples of the polymerization initiator include methyllithium, ethyllithium, n-propyllithium, n-butyllithium, sec-butyllithium, t-butyllithium, 1,4-dilithiobutane, phenyllithium, stillbenlithium, naphthyllithium, sodium naphthyl, potassium naphthyl, din-butylmagnesium, di-n-hexylmagnesium, ethoxypotassium, and calcium stearate. Among these, a lithium compound can be preferably used as the polymerization initiator.

The polymerization reaction may be carried out in the presence of a compound obtained by mixing at least any one of the above-described alkali metal compound and alkaline earth metal compound with a compound having a functional group that interacts with an inorganic filler (hereinafter, this compound is also referred to as "initiation modifier"). By carrying out the polymerization in the presence of the initiation modifier, a functional group that interacts with the

inorganic filler can be introduced into the polymerization initiation terminal of the polymer (A1). Further, introducing a functional group that interacts with the inorganic filler into the initiation terminal of the polymer (A1) is preferable in that the low hysteresis loss performance (fuel efficiency) of the cross-linked product (more specifically vulcanized rubber) can be improved.

As used herein, the term "interaction" means that a covalent bond is formed between molecules, or an intermolecular force (e.g., an intermolecular electromagnetic force such as ion-dipole interaction, dipole-dipole interaction, a hydrogen bond, or Van der Waals force) that is weaker than a covalent bond is formed. "Functional group that interacts with an inorganic filler" means a group that has at least one atom that interacts with the inorganic filler. When the polymer composition contains silica as the inorganic filler, the polymer (A1) preferably has a functional group that interacts with silica. A "functional group that interacts with silica" means a group having at least one atom that interacts with silica (a nitrogen atom, a sulfur atom, a phosphorus atom, an oxygen atom or silicon atom). The silicon atom possessed by the "functional group that interacts with silica" is the silicon atom in the hydrocarbyloxysilyl group.

A reaction product of a lithium compound such as alkyllithium and a nitrogen-containing compound such as a secondary amine compound can be used as the initiation modifier. Examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tertbutyldimethylsilyl)piperazine, and 1,3-ditrimethylsilyl-1,3,5-triazinane.

In the case of carrying out the polymerization in the presence of the initiation modifier, the initiation modifier may be prepared by mixing the alkali metal compound or alkaline earth metal compound and the nitrogen-containing compound in advance, and the polymerization carried out by adding the prepared product to the polymerization system. Alternatively, the polymerization may be carried out by adding the alkali metal compound or alkaline earth metal compound and the nitrogen-containing compound to the polymerization system and mixing them in the polymerization system to prepare the initiation modifier.

The randomizer may be used to adjust the content of 1,2-vinyl bonds in the polymer obtained by the above polymerization. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. The randomizer may be used singly or in combination of two or more types.

The organic solvent used for polymerization may be any organic solvent that is inert to the reaction. Examples of the organic solvent include aliphatic hydrocarbons, alicyclic hydrocarbons, and aromatic hydrocarbons. Among these, the organic solvent is preferably a C3 to C8 hydrocarbon. Specific examples of the C3 to C8 hydrocarbon include n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. These organic solvents may be used singly or in combination of two or more types.

When the solution polymerization is used, the monomer concentration of the reaction solvent is preferably 5 to 50 mass%, more preferably 10 to 30 mass%, from the viewpoint of maintaining the balance between productivity and polymerization controllability. The polymerization reaction temperature is preferably -20°C to 150°C, more preferably 0 to 120°C, particularly preferably 20 to 100°C. The polymerization reaction is preferably performed under a pressure sufficient to maintain the monomer substantially in a liquid phase. Such a pressure can be achieved by, for example, pressurizing the reactor by use of a gas employed inert to the polymerization reaction.

The 1,2-vinyl content (vinyl content) of the conjugated diene-based polymer obtained by the above polymerization is preferably 5 to 70 mol%. When the vinyl content is 5 mol% or more, the grip properties tend to be good, and when it is 70 mol% or less, good wear resistance tends to be exhibited. From this point of view, the vinyl content is more preferably 10 mol% or more, and still more preferably 15 mol% or more. Further, the vinyl content is more preferably 60 mol% or less, and still more preferably 50 mol% or less. The vinyl content is a value measured by a $^1$H-NMR apparatus.

By the above polymerization, a conjugated diene-based polymer having an active terminal can be obtained. To terminate the polymerization, the polymer having an active terminal may be reacted with alcohol or hydrogen, while the polymer may be reacted with a compound having a functional group that interacts with an inorganic filler (hereinafter also referred to as "terminal modifier") or a coupling agent. By reacting the conjugated diene-based polymer having an active terminal with a terminal modifier, a modified conjugated diene-based polymer in which the polymerization-end terminal has been modified by a functional group which interacts with the inorganic filler may be obtained as the polymer (A1). Furthermore, it is preferable to use a polymer into which a functional group that interacts with the inorganic filler (especially silica) is introduced at the polymerization terminal as the polymer (A1) because low hysteresis loss properties can be improved. It is particularly preferred that the polymer (A1) has at least one functional group selected from the group consisting of an amino group, a nitrogen-containing heterocyclic group, a phosphino group, a hydroxyl group, a thiol group and a hydrocarbyloxysilyl group. As used herein, "active terminal" means a portion other than the structure

derived from the monomer having a carbon-carbon double bond, which is present at the end of the molecular chain. The active terminal is more specifically a metal terminal.

The terminal modifier is not particularly limited as long as it is a compound having a functional group that interacts with the inorganic filler and is capable of reacting with the active terminal of the conjugated diene-based polymer. Among these, the terminal modifier is preferably a compound having one atom selected from the group consisting of a nitrogen atom, a sulfur atom, a phosphorus atom, an oxygen atom, and a silicon atom, and having no active hydrogens bonded to the atom. The terminal modifier is preferably, in particular, a compound having one or more functional groups selected from the group consisting of an amino group, a group having a carbon-nitrogen double bond, a nitrogen-containing heterocyclic group, a phosphino group, a cyclic ether group, a cyclic thioether group, a protected hydroxyl group, a protected thiol group, and a hydrocarbyloxysilyl group and capable of reacting with the active terminal. The amino group is preferably a protected primary or secondary amino group, or a tertiary amino group.

The terminal modifier is preferably at least one species selected from the group consisting of the compounds represented by formula (5) and the compounds represented by formula (6).

[F3]

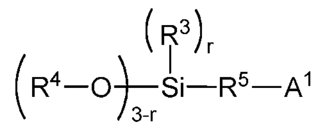

(5)

(In formula (5), $A^1$ represents a monovalent functional group which has at least one atom selected from the group consisting of nitrogen, phosphorus, oxygen, sulfur, and silicon, which does not have active hydrogen, and which is bonded to $R^5$ via a nitrogen atom, a phosphorus atom, an oxygen atom, a sulfur atom, a silicon atom, or a carbon atom contained in a carbonyl group, or a (thio)epoxy group; $R^3$ and $R^4$ each independently represent a hydrocarbyl group; $R^5$ represents a hydrocarbylene group; r is an integer of 0 to 2; when r is 2, a plurality of groups $R^3$ in the formula are the same or different; and when r is 0 or 1, a plurality of groups $R^4$ in the formula are the same or different.)

[F4]

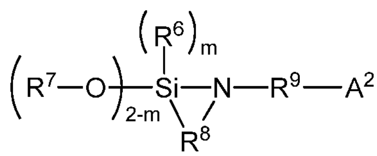

(6)

(In formula (6), $A^2$ represents a monovalent functional group which has at least one atom selected from the group consisting of nitrogen, phosphorus, oxygen, sulfur, and silicon, which does not have active hydrogen, and which is bonded to $R^9$ via a nitrogen atom, a phosphorus atom, an oxygen atom, a sulfur atom, or a silicon atom, or a C1 to C20 hydrocarbyl group; $R^6$ and $R^7$ each independently represent a hydrocarbyl group; $R^8$ represents a hydrocarbylene group; $R^9$ represents a single bond or a hydrocarbylene group; m is 0 or 1; and when m is 0, a plurality of groups $R^7$ in the formula are the same or different.)

In formulae (5) and (6), the hydrocarbyl group represented by $R^3$, $R^4$, $R^6$, $R^7$, or $A^2$ is preferably a C1 to C20 linear or branched alkyl group, a C3 to C20 cycloalkyl group, or a C6 to C20 aryl group.

The hydrocarbylene group represented by $R^5$ or $R^9$ is preferably a C1 to C20 linear or branched alkanediyl group, a C3 to C20 cycloalkylene group, or a C6 to C20 arylene group.

From the viewpoint of enhancing the reactivity of the terminal modifier to a conjugated diene-based polymer, r is preferably 0 or 1.

When $A^1$ is the aforementioned monovalent functional group, at least one atom (contained in $A^1$) selected from the group consisting of nitrogen, phosphorus, oxygen, sulfur, and silicon may be protected with a protective group (e.g., a tri-substituted hydrocarbylsilyl group). Also, when $A^2$ is the aforementioned monovalent functional group, at least one atom (contained in $A^2$) selected from the group consisting of nitrogen, phosphorus, oxygen, sulfur, and silicon may be protected with a protective group (e.g., a tri-substituted hydrocarbylsilyl group). As used herein, the term "active hydrogen" refers to a hydrogen atom bonded to an atom other than a carbon atom, preferably a hydrogen atom having a bonding energy lower than that of a carbon-hydrogen bond of polymethylene. The protective group is a functional group for converting the group $A^1$ or $A^2$ into a functional group inactive to a polymerization active terminal. The term "(thio)epoxy

group" is intended to encompass an epoxy group and a thioepoxy group.

$A^1$ may be a group that can be formed into an onium ion by an onium salt generator. When the terminal modifier has such a group ($A^1$), the terminal modifier can provide the polymer (A) with superior shape-maintaining ability. Specific examples of the group $A^1$ include a nitrogen-containing group prepared through substitution of two hydrogen atoms of a primary amino group with two protective groups, a nitrogen-containing group prepared through substitution of one hydrogen atom of a secondary amino group with one protective group, a tertiary amino group, an imino group, a pyridyl group, a phosphorus-containing group prepared through substitution of two hydrogen atoms of a primary phosphino group with two protective groups, a phosphorus-containing group prepared through substitution of one hydrogen atom of a secondary phosphino group with one protective group, a tertiary phosphino group, an epoxy group, a thioepoxy group, a group prepared through substitution of the hydrogen atom of a hydroxyl group with a protective group, a sulfurcontaining group prepared through substitution of the hydrogen atom of a thiol group with a protective group, and a hydrocarbyloxycarbonyl group. Of these, a nitrogen-atom-containing group is preferred, since it exhibits good affinity to silica. The group $A^1$ is more preferably a tertiary amino group or a nitrogen-containing group prepared through substitution of two hydrogen atoms of a primary amino group with two protective groups.

Specific examples of preferred terminal modifiers include compounds represented by formula (5), such as N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, N,N-dimethyl-3-(triethoxysilyl)propylamine, 3-(4-trimethylsilyl-1-piperazino)propylmethyldimethoxysilane, 3-glycidoxypropylmethyldimethoxysilane, and 3-glycidoxypropyltriethoxysilane.

Specific examples of compounds represented by formula (6) include 2,2-dimethoxy-1-(3-trimethoxysilylpropyl)-1,2-azasilolidine, 2,2-diethoxy-1-(3-trimethoxysilylpropyl)-1,2-azasilolidine, 2,2-dimethoxy-1-phenyl-1,2-azasilolidine, 1-trimethylsilyl-2,2-dimethoxy-1-aza-2-silacyclopentane, 2-(2,2-dimethoxy-1,2-azasilolidin-1-yl)-N,N-diethylethan-1-amine, 2-(2,2-dimethoxy-1,2-azasilolidin-1-yl)-N,N-dimethylethan-1-amine, and 3-(2,2-dimethoxy-1,2-azasilolidin-1-yl)-N,N-diethylpropan-1-amine. The terminal modifiers may be used singly or in combination of two or more species.

The terminal modification reaction may be, for example, a solution reaction. The solution reaction may be performed by use of a solution containing unreacted monomer after completion of polymerization reaction. Alternatively, the solution reaction may be performed through isolation of the conjugated diene-based polymer contained in the solution, and dissolution of the isolated polymer in an appropriate solvent (e.g., cyclohexane). The terminal modification reaction may be performed by a batch or continuous process. No particular limitation is imposed on the method of adding the terminal modifier. The terminal modifier may be added at one time or in a divided or continuous manner.

The amount of the terminal modifier used may be appropriately determined depending on the type of the compound used in the reaction. The amount of the terminal modifier is preferably 0.1 mole equivalents or more, more preferably 0.3 mole equivalents or more, relative to the metal atom (responsible for the polymerization reaction) of the polymerization initiator. When the amount of the terminal modifier used is adjusted to 0.1 mole equivalents or more, the modification reaction can be sufficiently progressed, and the effect of improving the dispersibility of an inorganic filler can be desirably achieved. The terminal modification reaction temperature is generally equal to the polymerization reaction temperature, and is preferably - 20 to 150°C, more preferably 0 to 120°C, and particularly preferably 20 to 100°C. An excessively low modification reaction temperature tends to lead to an increase in the viscosity of the polymer solution, whereas an excessively high modification reaction temperature promotes the inactivation of the polymerization active terminal. The terminal modification reaction time is preferably 1 minute to 5 hours, more preferably 2 minutes to 1 hour.

For the purpose of, for example, adjustment of the Mooney viscosity of the polymer (A1), the conjugated diene-based polymer having an active terminal may be reacted with a coupling agent such as silicon tetrachloride or a polyfunctional epoxy compound (e.g., tetraglycidyl-1,3-bisaminomethylcyclohexane) before, after, or during the modification reaction by use of the terminal modifier. The amount of the coupling agent used may be appropriately determined depending on, for example, the desired Mooney viscosity of the polymer (A1) or the type of the compound used for the reaction. The amount of the coupling agent is preferably 0.01 to 0.8 mole equivalents relative to the metal atom (responsible for the polymerization reaction) of the polymerization initiator. A single coupling agent may be used, or two or more coupling agents may be used in combination.

Subsequently, the polymer (A1) can be produced through hydrogenation of the above-produced modified or unmodified conjugated diene-based polymer. The hydrogenation reaction may be performed by any method under any conditions, so long as the resultant conjugated diene-based polymer exhibits a desired percent hydrogenation. Examples of the hydrogenation method include a method involving the use of a hydrogenation catalyst containing an organic titanium compound as a main component; a method involving the use of a catalyst containing an organic compound of iron, nickel, or cobalt and an organic metal compound (e.g., an alkylaluminum); a method involving the use of an organic complex of an organic metal compound of, for example, ruthenium or rhodium; and a method involving the use of a catalyst including a carrier (e.g., carbon, silica, or alumina) on which a metal (e.g., palladium, platinum, ruthenium, cobalt, or nickel) is supported. Industrially preferred is a method involving hydrogenation under mild conditions (low pressure

and low temperature) by use of a homogeneous catalyst containing an organic titanium compound only, or containing an organic titanium compound and an organic compound of a metal (lithium, magnesium, or aluminum) (Japanese Kokoku Patent Publication Nos. S63-4841 and H01-37970). Such a hydrogenation method achieves high hydrogenation selectivity to a double bond of butadiene, and is suitable for the object of the present disclosure.

The hydrogenation of the conjugated diene-based polymer is performed in a solvent that is inert to a catalyst and can dissolve the conjugated diene-based polymer. Examples of preferred solvents include aliphatic hydrocarbons, such as n-pentane, n-hexane, and n-octane; alicyclic hydrocarbons, such as cyclohexane and cycloheptane; aromatic hydrocarbons, such as benzene and toluene; and ethers, such as diethyl ether and tetrahydrofuran. These solvents may be used singly. Alternatively, a mixture containing such a solvent as a main component may be used.

In general, the hydrogenation reaction is performed through the following procedure: the conjugated diene-based polymer is maintained at a predetermined temperature in a hydrogen or inert atmosphere, a hydrogenation catalyst is added under stirring or nonstirring, and hydrogen gas is introduced to thereby increase the pressure to a predetermined level. The term "inert atmosphere" refers to an atmosphere that causes no reaction to the participants in the hydrogenation reaction; for example, a helium, neon, or argon atmosphere. Air or oxygen is not preferred, since it causes inactivation of a catalyst through, for example, oxidation of the catalyst. Nitrogen is not also preferred, since it acts as a catalyst poison during the hydrogenation reaction to thereby reduce hydrogenation activity. Most preferably, the hydrogenation reactor is filled with a hydrogen gas atmosphere alone.

The hydrogenation reaction process for producing the hydrogenated conjugated diene-based polymer may be a batch process, a continuous process, or a mixture thereof. In the case where the hydrogenation catalyst is a titanocene diaryl compound, the compound may be added as is to the reaction mixture, or may be added in the form of a solution of the compound in an inert organic solvent. The inert organic solvent used when the catalyst is used in the form of a solution may be any solvent that does not react with the participants in the hydrogenation reaction. Preferably, the inert organic solvent is identical to the solvent used in the hydrogenation reaction. The amount of the catalyst added is 0.02 to 20 mmol relative to 100 g of the conjugated diene-based polymer before hydrogenation.

The polymer (A1) is a conjugated diene-based polymer satisfying the above-mentioned expression (i). More specifically, the polymer (A1) has a value specified by expression (ii) (hereinafter also referred to as "value $\alpha$") of 0.75 or more and 0.95 or less. By setting $\alpha$ to 0.75 or more, a cross-linked product having sufficiently high strength and wear resistance can be obtained. For this reason, $\alpha$ is preferably 0.78 or more, more preferably 0.80 or more, and still more preferably 0.85 or more. Further, from the viewpoint of sufficiently carrying out the crosslinking reaction, $\alpha$ is 0.95 or less.

Formula (ii):

$$\alpha = (p+(0.5\times r))/(p+q+(0.5\times r)+s)$$

The value $\alpha$ defined by the above expression (ii) corresponds to the hydrogenation rate of the polymer (A1). For example, when $\alpha$ is 0.75, the hydrogenation rate of the polymer (A1) is 75%. When $\alpha$ is 0.95, the hydrogenation rate of the polymer (A1) is 95%. The hydrogenation ratio of the polymer can be adjusted, for example, by controlling the duration of hydrogenation reaction or controlling the amount of accumulation of hydrogen supplied. In the present description, the hydrogenation ratio is measured by a $^1$H-NMR apparatus.

The polymer (A1) is preferably produced through a method in which a monomer containing 1,3-butadiene is subjected to solution polymerization in the presence of an alkali metal compound, and the resultant polymer solution is subjected to terminal modification reaction and then hydrogenation reaction. This method is industrially advantageous. In this case, the polymer (A1) can be isolated by removing the solvent from the above-prepared solution. The polymer can be isolated through a known solvent removal method (e.g., steam stripping) or a drying operation such as thermal treatment.

The polymer (A1) has a weight average molecular weight (Mw) of preferably $1.0 \times 10^5$ to $2.0 \times 10^6$. When the Mw is $1.0 \times 10^5$ or more, the resultant cross-linked product achieves sufficiently high wear resistance and fuel efficiency. When the weight average molecular weight is $2.0 \times 10^6$ or less, the composition exhibits favorable processability, which is preferred. The weight average molecular weight of the polymer (A1) is more preferably $1.1 \times 10^5$ or more, still more preferably $1.2 \times 10^5$ or more. The weight average molecular weight of the polymer (A1) is more preferably $1.5 \times 10^6$ or less, still more preferably $1.2 \times 10^6$ or less. As used herein, the weight average molecular weight of a polymer is measured through gel permeation chromatography (GPC) as reduced to polystyrene, and corresponds to the overall peak weight average molecular weight (total weight average molecular weight).

To obtain a cross-linked product having excellent grip performance on ice, the polymer (A1) has a glass transition temperature (Tg) of preferably -20°C or less, more preferably -30°C or less, further preferably -35°C or less, still more preferably -40°C or less, and particularly preferably -45°C or less. To obtain a cross-linked rubber having high strength and high wear resistance, the polymer (A1) has a Tg of preferably -70°C or more. In the present description, Tg of the

polymer is measured by a differential scanning calorimetry (DSC) apparatus according to ASTM D3418.

The composition may contain only the polymer (A1) as the conjugated diene-based polymer (A). Also, the composition may further contain a polymer different from the polymer (A1). The polymer different from the polymer (A1) is preferably a non-hydrogenated conjugated diene-based polymer (hereinafter, also referred to as "polymer (A2)"). Examples of the polymer (A2) include natural rubber (NR), styrene-butadiene rubber (SBR), butadiene rubber (BR; for example, high-cis BR having 90% or more of cis-1,4 bonds, syndiotactic-1,2-polybutadiene (SPB) - containing BR, and the like), isoprene rubber (IR), styrene isoprene copolymer rubber, and butadiene isoprene copolymer rubber. Of these, the polymer (A2) is preferably at least one selected from the group consisting of NR, BR and SBR.

The polymer (A2) can be produced by the same method as described for polymer (A1) except that the hydrogenation reaction is not carried out in the method for producing polymer (A1). Regarding the monomer unit constituting the polymer (A2) and the preferable range of the various physical property values, such as the weight average molecular weight, the content of the aromatic vinyl compound unit, the vinyl content, and the glass transition temperature of the polymer (A2), the description made in relation to polymer (A1) is incorporated here.

The content of the polymer (A1) in the composition is preferably 50% by mass or more relative to the total amount of the conjugated diene-based polymer (A) containing in the composition to obtain a cross-linked product having excellent strength and wear resistance. From the regard, the content of the polymer (A1) is more preferably 60% by mass or more, further preferably 70% by mass or more, and still more preferably 80% by mass or more, relative to the total amount of the conjugated diene-based polymer (A).

Furthermore, the content of the polymer (A1) is preferably 30% by mass or more, more preferably 40% by mass or more, further preferably 60% by mass or more, and still more preferably 80% by mass or more relative to the total amount of the rubber components in the polymer composition. The conjugated diene-based polymer (A) may be used singly or in combination of two or more types.

As used herein, the "rubber component" included in the polymer composition means a polymer capable of obtaining a cured product that exhibits rubber elasticity by thermosetting. At room temperature, this cured product undergoes a large deformation by a small force (for example, a two-fold deformation or more when stretched at room temperature), and rapidly returns to almost its original shape when the force is removed.

<High-hardness filler (B)>

A high-hardness filler (B) blended in the present composition has a Mohs hardness of 5 or more. By blending such filler in the polymer composition together with the polymer (A1), vulcanized rubber having high grip performance on ice can be obtained even when the polymer (A1) is included, and the composition can be suitably applied as a rubber material for, for example, winter tires and all-season tires. The high-hardness filler (B) does not include silica described later.

Mohs hardness is one of indications of how hard a substance is, and measured based on the presence or absence of a scratch when a sample is scratched using a standard mineral. 10 minerals are used as the standard mineral, and an integer value of a hardness of 1 to 10 are assigned to the respective 10 minerals depending on the hardness. A larger numerical value of Mohs hardness means that the sample is harder.

Specific examples of material constituting the filler having a Mohs hardness of 5 or more include asbestos, manganese, nickel, glass, amphibole, feldspar, pumice, iron oxide, iridium, ruthenium, agate, chromium dioxide, garnet, quartz, silicon, chromium, topaz, corundum, beryllium oxide, zirconium oxide, tungsten, titanium nitride, tantalum carbide, zirconium carbide, chromium, alumina, silicon carbide, boron carbide, aluminum boride and diamond. The shape of the high-hardness filler (B) is not particularly limited and examples thereof include particles and fiber. Of them, particles are preferred.

The high-hardness filler (B) has a Mohs hardness of preferably 6 or more, more preferably 7 or more, still more preferably 8 or more, and particularly preferably 9 and 10 from the viewpoint of enhancement of the effect of improving grip performance on ice. The high-hardness filler (B) blended in the composition is preferably at least one selected from the group consisting of alumina, silicon carbide, boron carbide, aluminum boride and diamond, and particularly preferably at least one selected from the group consisting of alumina, silicon carbide, boron carbide and diamond.

When the high-hardness filler (B) is in the form of particles, the average particle size of the particles are not particularly limited as long as the effect of the present disclosure is obtained. It is preferable that the high-hardness filler (B) has an average particle size of 500 μm or less in order to suppress reduction of strength of the vulcanized rubber obtained using the composition. From the above point of view, the high-hardness filler (B) has an average particle size of more preferably 300 μm or less, further preferably 150 μm or less, and still more preferably 100 μm or less. The high-hardness filler (B) has an average particle size of preferably 2 μm or more, more preferably 10 μm or more from the viewpoint of enhancement of the effect of improving grip performance on ice. The average particle size of the high-hardness filler (B) is measured by a laser diffraction/ scattering method.

It is preferable that the high-hardness filler (B) is composed of a substance having thermal conductivity of 10

W/ (m · K) or more. By blending a filler made of a substance having high hardness and high thermal conductivity in the composition, the effect of improving performance on wet ice can be further improved. From the point of view, the high-hardness filler (B) has a thermal conductivity of more preferably 20 W/ (m · K) or more, further preferably 30 W/ (m · K) or more, and still more preferably 100 W/ (m · K) or more. At least one of silicon carbide and diamond may be particularly preferably used as the high-hardness filler (B) because they have high hardness and high thermal conductivity.

The content of the high-hardness filler (B) included in the composition is not particularly limited as long as the effect of the present disclosure is obtained. It is preferable that the content of the high-hardness filler (B) is 1 part by mass or more relative to 100 parts by mass of the content of the rubber component in the composition (i.e., the total content of the conjugated diene-based polymer (A) and other rubber components). A content of the high-hardness filler (B) in the above range is preferred because a cross-linked product having good grip performance on ice can be obtained. From the point of view, the content of the high-hardness filler (B) is more preferably 2 parts by mass or more, and still more preferably 5 parts by mass or more relative to 100 parts by mass of the rubber component. Furthermore, the content of the high-hardness filler (B) is preferably 50 parts by mass or less, more preferably 40 parts by mass or less, further preferably 30 parts by mass or less, and still more preferably 25 parts by mass or less relative to 100 parts by mass of the total amount of the rubber component to suppress reduction of strength and wear resistance of the cross-linked product. The high-hardness filler (B) may be used singly or in combination of two or more types.

<Other components>

The present composition may also include the following components in addition to the conjugated diene-based polymer (A) and the high-hardness filler (B).

· Thermally expandable component

The composition may further contain at least one thermally expandable component selected from the group consisting of a foaming agent, thermally expandable microcapsules, and thermally expandable graphite (hereinafter, also referred to as "thermally expandable component (C)"), for the purpose of further enhancing the grip performance on ice of the obtained cross-linked product. When the composition contains the thermally expandable component (C), it is possible to improve frictional force on ice due to the surface irregularities formed on the rubber surface after vulcanization. Therefore, the present composition containing the thermally expandable component (C) is particularly suitable for producing winter tires and all-season tires.

The foaming agent is not particularly limited, and various chemical foaming agents such as organic foaming agents and inorganic foaming agents can be used. Specific examples of these include: as an inorganic foaming agent, sodium hydrogencarbonate and ammonium carbonate; as an organic foaming agent, an azo foaming agent such as diazoaminebenzene, azodicarbonamide, azobisisobutyronitrile, and barium azodicarboxylate; a nitroso foaming agent such as N,N'-dinitrosopentamethylenetetramine; and a hydrazide foaming agent such as p,p'-oxybisbenzenesulfonylhydrazide, benzenesulfonylhydrazide, toluenesulfonylhydrazide, and hydrazodicarbonamide. Further, as the organic foaming agent, a chemical foaming agent-containing resin, which is a composite material of a chemical foaming component such as an azo compound, a nitroso compound, a hydrazide compound, or hydrogen carbonate and a resin may be used.

The foaming agent used to prepare the composition can be obtained as a commercial product. Specific examples include, by product name, Cell Powder F-10, Cell Powder F-35, Cell Powder F-35L, Cell Powder F-50, Cellular D, Vinihole AC, Vinihole AZ, and Neocellborn (all manufactured by Eiwa Kasei Industry); Cellmic A, Cellmic A-1, Cellmic AN, Cellmic C, Cellmic S, Cellmic SX, and Cellmic SX-H (all manufactured by Sankyo Kasei Co., Ltd.); Sponge paste No. 4 (manufactured by Ouchi Shinko Chemical Industrial Co., Ltd.); and Uniform AZ (manufactured by Otsuka Chemical Co., Ltd.). When a foaming agent is blended in the composition, a foaming aid may be used in combination. Examples of the foaming aid include the Cell Paste series manufactured by Eiwa Kasei Industry, and the Cellton series manufactured by Sankyo Kasei Co., Ltd..

The thermally expandable microcapsule is a component containing a thermally expandable substance (for example, an aliphatic hydrocarbon) inside an outer shell formed of a thermoplastic resin. Examples of such thermally expandable microcapsules include, by product name, Microspheres F-50D, F-85D, and F100D (all manufactured by Matsumoto Yushi-Seiyaku Co., Ltd.); and EXPANCEL 091DU-80 and 092DU-120 (both manufactured by Expancel).

Thermally expandable graphite consists of particles that contains a substance that vaporizes by heat between layers. Conventionally known products can be used as such thermal expansion graphite. Examples of commercially available products of thermally expandable graphite include Graphcard 160-50N and 160-80N (both manufactured by Tomoe Engineering Co., Ltd.).

The content of the thermally expandable component (C) in the composition is not particularly limited as long as the effects of the present disclosure can be obtained. The content of the thermally expandable component (C) is

preferably 0.01% by mass or more, more preferably 0.1% by mass or more, and still more preferably 0.5% by mass or more relative to the total amount of the composition, from the viewpoint of having sufficient effects of improving grip performance on ice. Further, from the perspective of suppressing the occurrence of defects in the production of the cross-linked product, the content of the thermally expandable component (C) is preferably 10% by mass or less, more preferably 5% by mass or less, relative to the total content of the composition. The thermally expandable component (C) may be used singly or in combination of two or more types.

· Other rubber components

The composition may contain only the conjugated diene-based polymer (A) as a rubber component. Also, the composition may contain, in addition to the conjugated diene-based polymer (A), a rubber component different from the conjugated diene-based polymer (A) (hereinafter may be referred to as "other rubber component"), so long as the effects of the present disclosure are not impaired. Examples of the type of such other rubber component include, but are not particularly limited to, halogenated butyl rubber. The amount of the other rubber component is preferably 60 mass% or less, more preferably 40 mass% or less, relative to the total amount of the rubber components (the conjugated diene-based polymer (A) and the other rubber component) contained in the polymer composition.

· Silica, etc.

The present composition preferably contains at least one species selected from the group consisting of silica and carbon black (hereinafter may be referred to as "silica, etc."). Silica is preferred, since it achieves favorable static/dynamic ratio and low hysteresis loss property. Carbon black is preferred, since it exhibits a high effect of improving the strength of the polymer composition and vulcanized rubber. Examples of the silica include wet silica (hydrated silica), dry silica (silicic anhydride), and colloidal silica. Of these, wet silica is preferred. Examples of the carbon black include furnace black, acetylene black, thermal black, channel black, and graphite. Of these, furnace black is preferred.

In the composition, the total amount of silica and carbon black is preferably 40 to 150 parts by mass relative to 100 parts by mass of the rubber components contained in the polymer composition. The amount of silica, etc. is preferably 40 parts by mass or more, since the effect of improving the strength of the resultant vulcanized rubber can be sufficiently achieved. Meanwhile, the amount of silica, etc. is preferably 150 parts by mass or less, since the wear resistance of the vulcanized rubber can be sufficiently secured. The amount of silica, etc. is preferably 50 parts by mass or more, more preferably 55 parts by mass or more, relative to 100 parts by mass of the total amount of the rubber components. Meanwhile, the amount of silica, etc. is preferably 150 parts by mass or less, more preferably 140 parts by mass or less, relative to 100 parts by mass of the total amount of the rubber components.

· Crosslinking agent

The composition preferably contains a crosslinking agent. No particular limitation is imposed on the type of the crosslinking agent to be used. Specific examples of the crosslinking agent include organic peroxides, phenolic resins, sulfur, sulfur compounds, p-quinone, p-quinone dioxime derivatives, bismaleimide compounds, epoxy compounds, silane compounds, amino resins, polyols, polyamines, triazine compounds, and metal soaps. The crosslinking agent to be used is preferably at least one species selected from the group consisting of organic peroxides, phenolic resins, and sulfur. These crosslinking agents may be used singly or in combination of two or more species.

Examples of the organic peroxide include 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy)hexane, 2,2'-bis(t-butylperoxy)-p-isopropylbenzene, dicumyl peroxide, di-t-butyl peroxide, and t-butyl peroxide.

Examples of the phenolic resin include p-substituted phenolic compounds represented by formula (7), o-substituted phenol-aldehyde condensates, m-substituted phenol-aldehyde condensates, and brominated alkylphenolaldehyde condensates. Of these, p-substituted phenolic compounds are preferred. Such a p-substituted phenolic compound can be prepared through condensation reaction between p-substituted phenol and an aldehyde (preferably formaldehyde) in the presence of an alkali catalyst.

[F5]

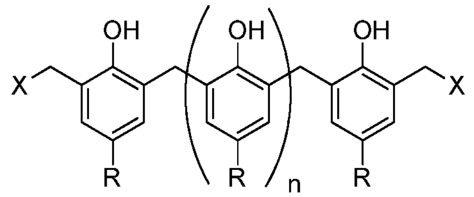

(7)

(In formula (7), X represents a hydroxyl group, a halogenated alkyl group, or a halogen atom; R represents a C1 to C15 monovalent saturated hydrocarbon group; and n is an integer of 0 to 10.)

Examples of commercially available phenolic resins include product name "Tackirol 201" (alkylphenol-formaldehyde resin, manufactured by Taoka Chemical Company, Limited); product name "Tackirol 250-I" (brominated alkylphenol-formaldehyde resin (percent bromination: 4%), manufactured by Taoka Chemical Company, Limited); product name "Tackirol 250-III" (brominated alkylphenol-formaldehyde resin, manufactured by Taoka Chemical Company, Limited); product name "PR-4507" (manufactured by Gun Ei Chemical Industry Co., Ltd.); product name "ST137X" (manufactured by Rohm & Haas Company); product name "Sumilite Resin PR-22193" (manufactured by Sumitomo Durez Co., Ltd.); product name "Tamanol 531" (manufactured by Arakawa Chemical Industries, Ltd.); product name "SP1059", product name "SP1045", product name "SP1055", and product name "SP1056" (all manufactured by Schenectady); and product name "CRM-0803" (manufactured by Showa Union Gosei Co., Ltd.). Of these, "Tackirol 201" is preferably used.

The amount of the crosslinking agent is preferably 0.01 to 20 parts by mass, more preferably 0.1 to 15 parts by mass, still more preferably 0.5 to 10 parts by mass, relative to 100 parts by mass of the total amount of the rubber components contained in the polymer composition.

· Resin component

A resin component may also be blended in the present composition together with the rubber component. The type of the resin component is not particularly limited, and examples thereof include a polyolefin resin such as polyethylene and polypropylene. When the resin component is blended therein, the amount of the resin component blended is preferably 1 to 50 parts by mass, more preferably 5 to 40 parts by mass relative to 100 parts by mass of the total amount of the rubber component in the polymer composition.

The composition may contain, in addition to the aforementioned components, any additive that is commonly used in a polymer composition for producing vulcanized rubber for various applications, such as tires, hoses, vibration-proof products, and belts. Examples of the additive include an antioxidant, zinc oxide, stearic acid, a softener, sulfur, and a vulcanization accelerator. The amount of such an additive incorporated into the polymer composition may be appropriately determined depending on the type of the additive, so long as the effects of the present disclosure are not impaired.

<<Cross-linked product and tire>>

The cross-linked product of the present disclosure can be produced through crosslinking treatment of the aforementioned polymer composition. When the cross-linked product is a rubber molded product, generally, the polymer composition is formed into a predetermined shape and then subjected to crosslinking treatment. The rubber molded product can be produced through a customary method. For example, in the production of a tire, the aforementioned polymer composition is mixed by means of a mixing machine such as a roll or a mixer and then formed into a predetermined shape, and the resultant product is placed at a predetermined position and then subjected to vulcanization molding through a customary method, to thereby form either or both of a tread and a sidewall. A pneumatic tire is thereby produced.

The cross-linked product (specifically, vulcanized rubber) of the present disclosure, exhibits excellent mechanical strength, and thus can be used in various rubber molded products. Specifically, the cross-linked product may be used for the following applications: materials for treads or sidewalls of tires; rolls or vibration-proof rubbers for industrial machines and facilities; hoses and hose covers, such as diaphragm, radiator hose, and air hose; sealing materials, such as packing, gasket, weather strip, O-ring, and oil seal; belts, such as belts for power transmission; and materials for linings, dust boots, wire harnesses, and shoe soles. Among these, the cross-linked product of the present disclosure is suitably applied to a tire member, an anti-vibration member, a belt member, a roll member, a hose member, a wire harness member, and a shoe sole member, and more suitably applied to a tire member, an anti-vibration member, a roll member, and a belt member.

The cross-linked product of the present disclosure has high strength and high wear resistance, and also has

excellent grip performance on ice. Thus, the cross-linked product of the present disclosure is particularly suitable as a tire member, in particular winter tires and all-season tires. Of those, it is particularly suitable as a material for one or both of a tire tread and a sidewall.

Examples

The following will specifically describe the present disclosure with reference to examples, but the present disclosure is not limited to these examples. Unless otherwise specified, the word "part(s)" and the symbol "%" described in the examples and comparative examples refer to part(s) by mass and % by mass. The methods for measuring the various physical properties are now shown below.

[Bonded styrene content (% by mass)] : Measured using an $^1$H-NMR apparatus at 400 MHz.
[Vinyl content (mol%)] : Measured using an $^1$H-NMR apparatus at 400 MHz.
[Hydrogenation rate (%)] and [$\alpha$] : Determined using a $^1$H-NMR apparatus at 500 MHz.
[First peak molecular weight]: Determined in terms of polystyrene from the retention time corresponding to the apex of the maximum peak of a GPC curve obtained using a gel permeation chromatograph (HLC-8120GPC (product name (manufactured by Tosoh Corporation))).
[Total weight average molecular weight]: Determined in terms of polystyrene from a GPC curve obtained using a gel permeation chromatograph (HLC-8120GPC (product name (manufactured by Tosoh Corporation))).

(GPC conditions)

Columns: 2 columns, product name "GMHXL" (manufactured by Tosoh Corporation)
Column temperature: 40°C
Mobile phase: tetrahydrofuran
Flow velocity: 1.0 ml/min
Sample concentration: 10 mg/20 ml
[Glass transition temperature Tg (°C)]: Measured using a differential scanning calorimetry (DSC) device in accordance with ASTM D3418.

<Production of hydrogenation catalyst>

[Synthesis of catalyst E]

A three-necked flask (volume: 1 L) equipped with a stirrer and a dropping funnel was purged with dry nitrogen, and anhydrous tetrahydrofuran (200 mL) and tetrahydrofurfuryl alcohol (0.2 mol) were added to the flask. Thereafter, n-butyllithium/cyclohexane solution (0.2 mol) was added dropwise to the three-necked flask at 15°C to allow reaction to proceed, to thereby prepare a tetrahydrofuran solution of tetrahydrofurfuryloxylithium.

Subsequently, a three-necked flask (volume: 1 L) equipped with a stirrer and a dropping funnel was purged with dry nitrogen, and bis($\eta$5-cyclopentadienyl)titanium dichloride (49.8 g, 0.2 mol) and anhydrous tetrahydrofuran (250 mL) were added to the flask. The tetrahydrofuran solution of tetrahydrofurfuryloxylithium prepared as described above was added dropwise to the flask under stirring at room temperature over about 1 hour. After the elapse of about 2 hours, a red-brown liquid was subjected to filtration, and insoluble matter was washed with dichloromethane.

Thereafter, the filtrate was mixed with the washing, and the solvent was removed under reduced pressure, to thereby produce a catalyst E [bis($\eta$-5-cyclopentadienyl)titanium (tetrahydrofurfuryloxy)chloride] (hereinafter may be referred to as "[chlorobis(2,4-cyclopentadienyl)titanium(IV) tetrahydrofurfurylalkoxide]"). The yield of the catalyst was 95%.

<Production of conjugated diene-based polymer>

[Production Example 1: Synthesis of conjugated diene-based polymer A-1]

An autoclave reaction vessel that had been purged with nitrogen and had an internal volume of 50 liters was charged with 25900 g of cyclohexane, 26 g of tetrahydrofuran, 1273 g of styrene, and 2361 g of 1,3-butadiene. The temperature of the contents of the reaction vessel was adjusted to 45°C, and then a cyclohexane solution including n-butyllithium (39 mmol) was added to initiate polymerization. The polymerization was carried out under adiabatic conditions, and the maximum temperature reached 80°C.

After it had been confirmed that the polymerization conversion rate had reached 99%, 111 g of 1,3-butadiene was added, and polymerization was carried out for a further 5 minutes to obtain a reaction solution including a polymer. The obtained reaction solution was charged with 2 mmol of silicon tetrachloride, the reaction was carried out for 10 minutes, then 28 mmol of N,N-dimethyl-3-(triethoxysilyl)propylamine was added, and the reaction was carried out for 20 minutes.

Next, the temperature of the system was raised to 80°C or higher, hydrogen was introduced into the system, and then 3.2 g of diethylaluminum chloride, 2.4 g of the catalyst E, and then n-butyllithium (15 mmol) were added. A hydrogenation reaction was carried out by supplying hydrogen so that the hydrogen pressure was maintained at 0.7 MPa or higher and a predetermined integrated hydrogen value was obtained. The reaction solution was then returned to normal temperature and pressure, and extracted from the reaction vessel to obtain a polymer solution containing a hydrogenated conjugated diene-based polymer.

The obtained polymer solution was charged with 1.4 g of 2,6-di-tert-butyl-p-cresol. Next, an aqueous solution (temperature: 80°C) adjusted to pH 8.5 (pH at 80°C according to a glass electrode method) with ammonia, which is a pH adjuster, was placed in a desolvation tank, the above polymer solution was added (in a proportion of 1000 parts by mass of the above aqueous solution relative to 100 parts by mass of the polymer solution), desolvation was performed by steam stripping (steam temperature: 190°C) for 2 hours at the 95°C temperature of the liquid phase of the desolvation tank, and drying was carried out using a heat roll adjusted to 110°C to obtain a conjugated diene-based polymer A-1. The analytical values of the obtained conjugated diene-based polymer A-1 are shown in Table 2. The conjugated diene-based polymer A-1 had a first peak molecular weight of $20\times10^4$, a weight average molecular weight (total weight average molecular weight) of $34\times10^4$, a hydrogenation rate of 93% ($\alpha$ = 0.93), and a glass transition temperature of -34°C.

[Production Examples 2 to 7 and 9: Synthesis of conjugated diene-based polymers A-2 to A-7 and A-9]

Conjugated diene-based polymers A-2 to A-7 and A-9 were each obtained by performing polymerization in the same manner as in Production Example 1, except that the used raw materials were changed as shown in Table 1 and the hydrogen supply amount was changed. Table 2 shows the analytical values of conjugated diene-based polymers A-2 to A-7 and A-9.

[Production Example 8: Synthesis of conjugated diene-based polymer A-8]

An autoclave reaction vessel that had been purged with nitrogen and had an internal volume of 50 liters was charged with 25900 g of cyclohexane, 26 g of tetrahydrofuran, 1273 g of styrene, and 2361 g of 1,3-butadiene. The temperature of the contents of the reaction vessel was adjusted to 45°C, and then a cyclohexane solution including n-butyllithium (39 mmol) was added to initiate polymerization. The polymerization was carried out under adiabatic conditions, and the maximum temperature reached 80°C.

After it had been confirmed that the polymerization conversion rate had reached 99%, 111 g of butadiene was added (additional butadiene), and polymerization was carried out for a further 5 minutes to obtain a reaction solution including a polymer. The obtained reaction solution was charged with 2 mmol of silicon tetrachloride, the reaction was carried out for 10 minutes, then 28 mmol of N,N-dimethyl-3-(triethoxysilyl)propylamine was added, and the reaction was carried out for 20 minutes. Next, the temperature of the reaction solution was raised to 80°C or higher, hydrogen was introduced into the system, then the reaction solution was returned to normal temperature and pressure, and extracted from the reaction vessel to obtain a polymer solution containing a conjugated diene-based copolymer.

The obtained polymer solution was charged with 1.4 g of 2,6-di-tert-butyl-p-cresol. Next, an aqueous solution (temperature: 80°C) adjusted to pH 8.5 (pH at 80°C according to a glass electrode method) with ammonia, which is a pH adjuster, was placed in a desolvation tank, the above polymer solution was added (in a proportion of 1000 parts by mass of the above aqueous solution relative to 100 parts by mass of the polymer solution), desolvation was performed by steam stripping (steam temperature: 190°C) for 2 hours at the 95°C temperature of the liquid phase of the desolvation tank, and drying was carried out using a heat roll adjusted to 110°C to obtain a conjugated diene-based polymer A-8. The obtained conjugated diene-based polymer A-8 had a first peak molecular weight of $20\times10^4$, a weight average molecular weight (total weight average molecular weight) of $34\times10^4$, and a glass transition temperature of -40°C. The conjugated diene-based polymer A-8 had a hydrogenation rate of 0%, $\alpha$ = 0.

[Table 1]

| | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|
| Type of polymer | A-1 | A-2 | A-3 | A-4 | A-5 | A-6 | A-7 | A-8 | A-9 |
| Polymerization formulation | | | | | | | | | |
| Solvent | | | | | | | | | |
| : Cyclohexane (g) | 25900 | 25900 | 25900 | 25900 | 25900 | 25900 | 25900 | 25900 | 25900 |
| Vinyl-content adjusting agent | | | | | | | | | |
| : Tetrahydrofuran (g) | 26 | 67 | 67 | 28 | 64 | 18 | 180 | 26 | 26 |
| Monomer | | | | | | | | | |
| : Styrene (g) | 1273 | 740 | 370 | 370 | 740 | 370 | 1490 | 1273 | 1273 |
| : Butadiene (g) | 2361 | 2894 | 3264 | 3264 | 2894 | 3264 | 2144 | 2361 | 2361 |
| : Additional butadiene (g) | 111 | 111 | 111 | 111 | 111 | 111 | 111 | 111 | 111 |
| Polymerization initiator | | | | | | | | | |
| : n-butyllithium (mmol) | 39 | 39 | 39 | 39 | 39 | 39 | 39 | 39 | 39 |
| : Compound A (mmol) | - | - | 27 | - | - | - | - | - | - |
| Amine-based modifier | | | | | | | | | |
| : Compound B (mmol) | 28 | 28 | 28 | 28 | 28 | 28 | 28 | 28 | 28 |
| Coupling agent | | | | | | | | | |
| : Compound C (mmol) | 2 | 2 | 2 | 2 | 2 | 2 | 2 | 2 | 2 |

In Table 1, the abbreviations of the compounds represent the following compounds.

Compound A: Piperidine
Compound B: N,N-dimethyl-3-(triethoxysilyl)propylamine
Compound C: Silicon tetrachloride

In Table 1, "-" indicates that the compound in the corresponding column was not used.

[Table 2]

| | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|
| Type of polymer | A-1 | A-2 | A-3 | A-4 | A-5 | A-6 | A-7 | A-8 | A-9 |
| Bonded styrene content (wt%) | 34 | 20 | 10 | 10 | 20 | 10 | 40 | 34 | 34 |
| Vinyl content (mol%) | 27 | 35 | 35 | 30 | 33 | 24 | 48 | 27 | 27 |
| Hydrogenation rate (%) | 93 | 95 | 92 | 88 | 89 | 87 | 87 | 0 | 60 |
| α | 0.93 | 0.95 | 0.92 | 0.88 | 0.89 | 0.87 | 0.87 | 0 | 0.60 |
| First peak molecular weight ($\times 10^4$) | 20 | 21 | 22 | 20 | 21 | 20 | 19 | 20 | 20 |
| Weight average molecular weight ($\times 10^4$) | 34 | 32 | 38 | 30 | 32 | 30 | 28 | 34 | 37 |
| Glass transition temperature (°C) | -34 | -46 | -52 | -52 | -45 | -48 | -28 | -40 | -33 |

<Production of polymer composition and evaluation of properties thereof>

[Examples 1 to 18 and Comparative Examples 1 to 7]

Using a plastomill (internal capacity: 250 cc) equipped with a temperature control device, a first stage of kneading was carried out by mixing and kneading the conjugated diene-based polymer, the high-hardness filler (B), silica, a silane coupling agent, extender oil, stearic acid, zinc oxide, and an antioxidant in the blending formulations of Tables 3 and 4 under conditions of a filling rate of 72% and a rotation speed of 60 rpm. Next, for the second stage kneading, the compound prepared above was cooled to room temperature, and then the thermally expandable component (C), sulfur and a vulcanization accelerator were kneaded according to the blending formulation of Table 3 and Table 4. The resultant was molded and vulcanized at 160°C for a predetermined time using a vulcanizing press to obtain a vulcanized rubber. The following properties (1) to (4) were evaluated using the vulcanized rubber. The type and the ratio of the conjugated diene-based polymer, the high-hardness filler (B) and the thermally expandable component (C) used in each Examples and Comparative Examples are as shown in Table 3 and Table 4. In Comparative Examples 6 and 7, a filler (B-7, B-8) having a Mohs hardness of less than 5 was blended instead of the high-hardness filler (B). The numerical values in Tables 3 and 4 represent the blended proportion (parts by mass) of each component.

<Evaluation of properties>

(1) Tensile strength

A tensile test was conducted in accordance with JIS K6251: 2010 using vulcanized rubber as a measurement sample. Here, using a No. 3 type dumbbell as a test sample, the stress at break (TB) and the elongation at break (EB) were measured at room temperature. The larger the values of TB and EB, the larger the breaking strength, indicating that the mechanical strength of the material is high and good. The evaluation was performed using the TB value, and the result is shown based on a value standardized so that the TB value of Comparative Example 2 was 100.

(2) Change in hardness

Hardness of the respective specimens made of each vulcanized rubber sheet before and after aging was measured according to JIS K6253. Specimens were rated on a scale of A to C: those with a difference in hardness before and after heat aging of less than 3 was rated as "A," those with a difference of 3 or more and less than 6 as "B," and those with a difference of 6 or more as "C." "Heat aging" refers to a process in which fresh vulcanized rubber is heat-aged (100°C for 70 hours) according to JIS K6257: 2010 to obtain heat-aged vulcanized rubber.

(3) Grip performance on ice (initial stage)

A measurement sample of vulcanized rubber (vulcanized rubber before aging) with a diameter of 50 mm and a thickness of 10 mm was pressed against ice which had been immobilized and rotated at a surface pressure of 12 $kgf/cm^2$ and a sample rotation main speed of 20 cm/sec in a -2°C environment. The resulting frictional force was detected using a load cell, and dynamic friction coefficient $\mu$ was calculated. The evaluation was performed using the dynamic friction coefficient $\mu$, and the result is shown based on a value standardized so that the dynamic friction coefficient $\mu$ of Comparative Example 2 was 100.

(4) Grip performance on ice (evaluation of suppression of reduction of properties over time)

For a specimen made of vulcanized rubber after heat aging (100°C, 70 hours), dynamic friction coefficient $\mu^*$ after heat aging was calculated in the same manner as in the above (3) Grip performance on ice. Specimens were rated on a scale of A to C: those with a difference in grip performance on ice before and after heat aging of less than 3 was rated as "A," those with a difference of 3 or more and less than 6 as "B," and those with a difference of 6 or more as "C."

Tables 3 and 4 show the results of the evaluation of the properties of Examples 1 to 18 and Comparative Examples 1 to 7.

[Table 3]

| Blending formulation | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Component A (Conjugated diene-based polymer) | A-1 (100) | A-2 (100) | A-3 (100) | A-4 (100) | A-5 (100) | A-6 (100) | A-7 (100) | A-8 (100) | A-4 (100) | A-4 (100) | A-4 (100) | A-4 (100) | A-4 (100) |
| Component B (Filler) | B-4 (15) | B-4 (15) | B-4 (15) | B-4 (15) | B-4 (15) | B-4 (15) | B-4 (15) | B-1 (15) | B-2 (15) | B-3 (15) | B-5 (15) | B-4 (30) | B-4 (5) |
| Component C (Thermally expandable component) | | | | | | | | | | | | | |
| Silica *1) | 75 | 75 | 75 | 75 | 75 | 75 | 75 | 75 | 75 | 75 | 75 | 75 | 75 |
| Silane coupling agent *2) | 6.0 | 6.0 | 6.0 | 6.0 | 6.0 | 6.0 | 6.0 | 6.0 | 6.0 | 6.0 | 6.0 | 6.0 | 6.0 |
| Extender oil *3) | 34 | 34 | 34 | 34 | 34 | 34 | 34 | 34 | 34 | 34 | 34 | 34 | 34 |
| Stearic acid | 2.0 | 2.0 | 2.0 | 2.0 | 2.0 | 2.0 | 2.0 | 2.0 | 2.0 | 2.0 | 2.0 | 2.0 | 2.0 |
| Zinc oxide | 3.0 | 3.0 | 3.0 | 3.0 | 3.0 | 3.0 | 3.0 | 3.0 | 3.0 | 3.0 | 3.0 | 3.0 | 3.0 |
| Antioxidant *4) | 1.0 | 1.0 | 1.0 | 1.0 | 1.0 | 1.0 | 1.0 | 1.0 | 1.0 | 1.0 | 1.0 | 1.0 | 1.0 |
| Vulcanization accelerator CZ * 5) | 1.8 | 1.8 | 1.8 | 1.8 | 1.8 | 1.8 | 1.8 | 1.8 | 1.8 | 1.8 | 1.8 | 1.8 | 1.8 |
| Vulcanization accelerator D * 6) | 1.5 | 1.5 | 1.5 | 1.5 | 1.5 | 1.5 | 1.5 | 1.5 | 1.5 | 1.5 | 1.5 | 1.5 | 1.5 |
| Forming aid *7) | | | | | | | | | | | | | |
| Sulfur | 1.5 | 1.5 | 1.5 | 1.5 | 1.5 | 1.5 | 1.5 | 1.5 | 1.5 | 1.5 | 1.5 | 1.5 | 1.5 |
| Evaluation | | | | | | | | | | | | | |
| Tensile strength | 156 | 164 | 168 | 162 | 147 | 156 | 137 | 162 | 156 | 154 | 142 | 130 | 157 |

(continued)

| Blending formulation | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Change in hardness | A | A | A | B | B | B | B | B | B | B | B | B | B |
| Grip performance on ice (initial stage) | 108 | 111 | 113 | 115 | 113 | 110 | 106 | 111 | 115 | 111 | 112 | 106 | 107 |
| Grip performance on ice (over time) | A | A | A | B | B | B | A | B | B | B | B | B | A |

[Table 4]

| Blending formulation | Example 14 | Example 15 | Example 16 | Example 17 | Example 18 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Component A (Conjugated diene-based polymer) | A-4 (100) | A-4 (100) | A-4 (100) | A-4 (100) | A-4 (100) | A-7 (100) | A-8 (100) | A-9 (100) | A-9 (100) | A-9 (100) | A-9 (100) | A-9 (100) |
| Component B (Filler) | B-4 (15) | B-4 (15) | B-4 (15) | B-4 (15) | B-4 (15) | | | | B-4 (15) | B-6 (15) | B-7 (15) | B-8 (15) |
| Component C (Thermally expandable component) | C-1 (3) | C-2 (3) | C-3 (3) | C-4 (3) | C-5 (3) | | | | | | | |
| Silica *1) | 75 | 75 | 75 | 75 | 75 | 75 | 75 | 75 | 75 | 75 | 75 | 75 |
| Silane coupling agent *2) | 6.0 | 6.0 | 6.0 | 6.0 | 6.0 | 6.0 | 6.0 | 6.0 | 6.0 | 6.0 | 6.0 | 6.0 |
| Extender oil *3) | 34 | 34 | 34 | 34 | 34 | 34 | 34 | 34 | 34 | 34 | 34 | 34 |
| Stearic acid | 2.0 | 2.0 | 2.0 | 2.0 | 2.0 | 2.0 | 2.0 | 2.0 | 2.0 | 2.0 | 2.0 | 2.0 |
| Zinc oxide | 3.0 | 3.0 | 3.0 | 3.0 | 3.0 | 3.0 | 3.0 | 3.0 | 3.0 | 3.0 | 3.0 | 3.0 |
| Antioxidant *4) | 1.0 | 1.0 | 1.0 | 1.0 | 1.0 | 1.0 | 1.0 | 1.0 | 1.0 | 1.0 | 1.0 | 1.0 |
| Vulcanization accelerator CZ *5) | 1.8 | 1.8 | 1.8 | 1.8 | 1.8 | 1.8 | 1.8 | 1.8 | 1.8 | 1.8 | 1.8 | 1.8 |
| Vulcanization accelerator D *6) | 1.5 | 1.5 | 1.5 | 1.5 | 1.5 | 1.5 | 1.5 | 1.5 | 1.5 | 1.5 | 1.5 | 1.5 |
| Forming aid *7) | | | 3.0 | | | | | | | | | |
| Sulfur | 1.5 | 1.5 | 1.5 | 1.5 | 1.5 | 1.5 | 1.5 | 1.5 | 1.5 | 1.5 | 1.5 | 1.5 |
| Evaluation | | | | | | | | | | | | |

(continued)

| Blending formulation | Example 14 | Example 15 | Example 16 | Example 17 | Example 18 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Tensile strength | 143 | 140 | 147 | 141 | 144 | 155 | 100 | 103 | 94 | 88 | 90 | 91 |
| Change in hardness | A | A | A | A | A | B | C | C | C | C | C | C |
| Grip performance on ice (initial stage) | 125 | 123 | 122 | 121 | 124 | 92 | 100 | 98 | 109 | 96 | 92 | 93 |
| Grip performance on ice (over time) | A | A | A | A | A | B | C | C | C | C | C | C |

The details of the component B and the component C in Tables 3 and 4 are as follows.

B-1: alumina, trade name "60P1" made by Sumitomo Chemical Co. Ltd., Mohs hardness 9
B-2: nano diamond mixture, Blend Grade made by Carbodeon (content of nano diamond 30% by mass, Mohs hardness 10)
B-3: silicon carbide, trade name "Densic ultrafine DU A-4" made by SHOWA DENKO K.K., Mohs hardness 9
B-4: silicon carbide, trade name "SICF 900" made by Akzo Nobel, Mohs hardness 9
B-5: boron carbide, trade name "Boron Carbide Powder -50 μm" made by FUJIFILM Wako Chemicals Corporation, Mohs hardness 9
B-6: glass fiber made by Nippon Sheet Glass Company, Ltd., Mohs hardness 5
B-7: aluminum hydroxide, trade name "C-301N" made by Sumitomo Chemical Co. Ltd., Mohs hardness 3
B-8: boron nitride, trade name "SHOBN UHP-1" made by SHOWA DENKO K.K., Mohs hardness 2
C-1: Chemical foaming agent, product name "Cellmic AN", manufactured by Sankyo Kasei Co., Ltd.
C-2: Chemical foaming agent-containing resin (foamed particles), product name "Cell Powder F50", manufactured by Eiwa Kasei Industry
C-3: Chemical foaming agent, product name "Cellular D", manufactured by Eiwa Kasei Industry
C-4: Thermally expandable microcapsules, product name "Microsphere F100D", manufactured by Eiwa Kasei Industry
C-5: Expanded graphite, product name "Graphcard 160-50N", manufactured by Tomoe Engineering Co., Ltd.

B-1 to B-6 correspond to the high-hardness filler (B). C-1 to C-5 correspond to the thermally expandable component (C).
The details of each of the components *1) to *7) used in Tables 3 and 4 are as follows.

*1) ZEOSIL 1165MP manufactured by Rhodia Silcea
*2) Si75 manufactured by Evonik Industries AG
*3) Process oil T-DAE, manufactured by JX Nippon Oil & Energy USA Inc.
*4) Ozonone 6C, manufactured by Seiko Chemical Co., Ltd.
*5) Nocceler CZ, manufactured by Ouchi Shinko Chemical Industrial Co., Ltd.
*6) Nocceler D, manufactured by Ouchi Shinko Chemical Industrial Co., Ltd.
*7) Cellpaste 101 made by Eiwa Chemical Ind. Co., Ltd.

In Tables 3 and 4, the numerical values in parentheses represent the blended amounts (parts by mass) when the polymer composition was prepared.
As shown in Table 3 and Table 4, the polymer compositions containing the polymer (Al) with a hydrogenation ratio of 75% or more as the conjugated diene-based polymer (A) and the high-hardness filler (B) having a Mohs hardness of 5 or more (Examples 1 to 18) had a tensile strength of as high as 130 or more and a good grip performance on ice (initial stage) of 105 or more. Furthermore, in the polymer compositions of Examples 1 to 18, reduction of properties of both hardness and wet grip performance over time was suppressed with an excellent rating of "A" or "B". Furthermore, the polymer compositions containing the thermally expandable component (C) (Examples 14 to 18) had a tensile strength of as high as 140 or more and a very good grip performance on ice (initial stage) of 120 or more, and reduction of properties over time was suppressed; this shows that the polymer compositions have better properties than the polymer composition of Example 4 which does not contain the thermally expandable component (C).
By contrast, the polymer composition of Comparative Examples 1 to 3 which contained the polymer (A) but did not contain the high-hardness filler (B) had poor tensile strength or a poor grip performance on ice (initial stage) of 100 or less. Furthermore, for the polymer compositions of Comparative Examples 4, 5 in which a hydrogenated conjugated diene-based polymer with a hydrogenation ratio of 60% was used, the resulting vulcanized rubber had low strength even though the high-hardness filler (B) was blended, and ratings of reduction of properties over time were lower than those in Examples 1 to 18. Moreover, in Comparative Examples 6, 7 in which a hydrogenated conjugated diene-based polymer with a hydrogenation ratio of 60% was used and a filler having a Mohs hardness of 3 or 2 was blended instead of the high-hardness filler (B), the resulting vulcanized rubber had low strength with a rating of "C," and their properties were poorer than those of Examples 1 to 18.
The above results show that the polymer composition containing the polymer (Al) and the high-hardness filler (B) can provide a vulcanized rubber which has high strength and excellent grip performance on ice, and in which reduction of properties over time (in particular reduction of grip performance on ice over time) is suppressed.

## Claims

1. A polymer composition comprising:

   a conjugated diene-based polymer (A); and
   a filler having a Mohs hardness of 5 or more (B), wherein
   the conjugated diene-based polymer (A) comprises a polymer (AI) satisfying expression (i) when a composition ratio (molar ratio) of a structural unit represented by formula (1), a structural unit represented by formula (2), a structural unit represented by formula (3) and a structural unit represented by formula (4) in the polymer is p, q, r and s, respectively:

   Expression (i):

   $$0.75 \leq (p + (0.5 \times r))/ (p + q + (0.5 \times r) + s) \leq 0.95$$

   [F1]

   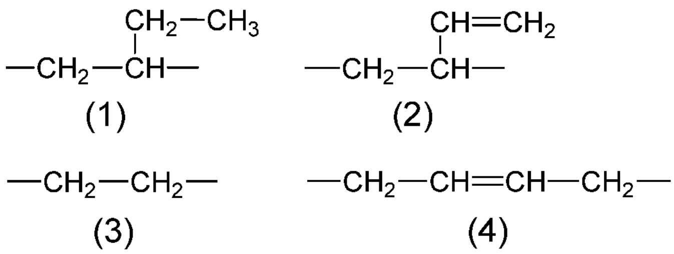

   (1) (2) (3) (4)

2. The polymer composition according to claim 1, wherein a proportion of the polymer (AI) in the conjugated diene-based polymer (A) is 50% by mass or more.

3. The polymer composition according to claim 1 or 2, wherein the polymer (AI) has a glass transition temperature of -40°C or lower.

4. The polymer composition according to any one of claims 1 to 3, wherein the polymer (AI) has a weight average molecular weight (Mw) in terms of polystyrene measured by a gel permeation chromatograph of $1.0\times10^5$ to $2.0\times10^6$.

5. The polymer composition according to any one of claims 1 to 4, wherein the filler (B) is at least one selected from the group consisting of alumina, silicon carbide, boron carbide and diamond.

6. The polymer composition according to any one of claims 1 to 5, further comprising a component (C), wherein the component (C) is at least one selected from the group consisting of a foaming agent, thermally microcapsules, and thermally expandable graphite.

7. The polymer composition according to any one of claims 1 to 6, further comprising at least one selected from the group consisting of silica and carbon black.

8. The polymer composition according to any one of claims 1 to 7, further comprising a crosslinking agent.

9. A cross-linked product obtained by employing the polymer composition according to any one of claims 1 to 8.

10. A tire in which one or both of a tread and a sidewall are formed using the polymer composition according to any one of claims 1 to 8.

**INTERNATIONAL SEARCH REPORT**

International application No. **PCT/JP2021/044032**

**A. CLASSIFICATION OF SUBJECT MATTER**

***B60C 1/00***(2006.01)i; ***C08L 9/00***(2006.01)i; ***C08K 3/013***(2018.01)i; ***C08K 3/04***(2006.01)i; ***C08K 3/36***(2006.01)i
FI: C08L9/00; C08K3/013; C08K3/36; C08K3/04; B60C1/00 A; B60C1/00 B

According to International Patent Classification (IPC) or to both national classification and IPC

**B. FIELDS SEARCHED**

Minimum documentation searched (classification system followed by classification symbols)

C08L9/00-9/10; C08K3/00-3/40; C08K5/00-5/59; B60C1/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/203984 A1 (JSR CORP.) 08 October 2020 (2020-10-08) claims, paragraphs [0006], [0051], [0052], [0056]-[0058], [0067], tables 2, 3 | 1-10 |
| Y | JP 60-137946 A (TOYO GOMU KOGYO KK) 22 July 1985 (1985-07-22) page 1, right column, lines 7-14 | 1-10 |
| Y | JP 2019-19202 A (BRIDGESTONE CORP.) 07 February 2019 (2019-02-07) paragraphs [0032], [0054] | 1-10 |
| Y | JP 2015-221854 A (THE YOKOHAMA RUBBER CO., LTD.) 10 December 2015 (2015-12-10) paragraph [0052] | 6-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/044032**

| Patent document cited in search report | Publication date (day/month/year) | Patent family member(s) | Publication date (day/month/year) |
|---|---|---|---|
| WO 2020/203984 A1 | 08 October 2020 | (Family: none) | |
| JP 60-137946 A | 22 July 1985 | (Family: none) | |
| JP 2019-19202 A | 07 February 2019 | (Family: none) | |
| JP 2015-221854 A | 10 December 2015 | US 2017/0183483 A1<br>paragraph [0116]<br>CN 106459507 A<br>WO 2015/178485 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020202658 A
- WO 2015064646 A
- JP S634841 B
- JP H0137970 B